# EUROPEAN PATENT APPLICATION

(11) **EP 3 315 202 A1**
(43) Date of publication of application: **02.05.2018**
(21) Application number: 17199129.2
(22) Date of filing: 30.10.2017
(51) Int. Cl.: B03B 9/04, B03C 3/017, C04B 18/08

(54) **METHOD FOR PROCESSING FLY ASH**

(30) Priority: 31.10.2016 FI 20165818
(71) Applicant: UPM-Kymmene Corporation, 00100 Helsinki (FI)
(72) Inventor: Silmu, Riikka, 54920 Taipalsaari (FI); Viitikko, Katja, 53500 Lappeenranta (FI); Virtanen, Pasi, 54920 Taipalsaari (FI)
(74) Representative: Papula Oy

(57) **Abstract**

A method for processing fly ash (1) obtainable from the combustion of biomass (8) is disclosed. The method comprises fractionating fly ash particles contained in the fly ash (1) by electrostatic precipitation into at least one coarser electrostatically precipitated fraction (2) and at least one finer electrostatically precipitated fraction (3, 4), and subfractionating the at least one coarser electrostatically precipitated fraction into at least one coarser subfraction (5) and at least one finer subfraction (6) based on the particle diameter of the fly ash particles contained therein.

## Description

### FIELD OF THE INVENTION

The invention relates to processing of fly ash.

### BACKGROUND

Fly ash is produced by combustion of various materials, including biomass, and contains fine particles that are driven out of the boiler together with flue gases. Fly ash may be captured by particle filtration equipment before the flue gases are released into the atmosphere.

### PURPOSE OF THE INVENTION

The purpose of the invention is to provide a new type of method for processing fly ash.

### SUMMARY

A method for processing fly ash is disclosed. The method comprises fractionating fly ash particles contained in the fly ash by electrostatic precipitation into at least one coarser electrostatically precipitated fraction and at least one finer electrostatically precipitated fraction, and subfractionating the at least one coarser electrostatically precipitated fraction into at least one coarser subfraction and at least one finer subfraction based on the particle diameter of the fly ash particles contained therein.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a schematic illustration of an embodiment of the method and apparatus for processing fly ash; and
Figs. 2A and 2B show particle size distributions of a coarse electrostatically precipitated fraction A before subfractionating, and of the coarser and the finer subfractions thereof.

### DETAILED DESCRIPTION

The term "fly ash" may, in the context of this specification, refer to ash that may be obtainable from the combustion of a material, such as biomass, and contains ash particles that are driven out, together with flue gases, of the boiler or combustor in which the material is combusted. Fly ash may be driven out together with flue gases, as opposed to e.g. ash that falls in the bottom of the boiler and may be referred to as bottom ash. Fly ash may be captured by electrostatic precipitators or other particle filtration equipment before the flue gases reach the chimneys. Electrostatic precipitation may also be used to fractionate fly ash particles contained in the fly ash into at least one coarser fraction and at least one finer fraction. However, the fly ash particle fractions thus obtained are not necessarily suitable for further uses, such as fertilization use. Typically the content of harmful components such as heavy metals is such that the electrostatically precipitated fly ash particle fractions, or some of the fractions, may not be used for applications such as field fertilizer applications. Legislation may set limits to the content of certain harmful components in fertilizer applications.

It has now been found that it is possible to produce two or more fly ash fractions that may be suitable for fertilization purposes.

A method for processing fly ash is disclosed. The method comprises fractionating fly ash particles contained in the fly ash by electrostatic precipitation into at least one coarser electrostatically precipitated fraction and at least one finer electrostatically precipitated fraction, and subfractionating the at least one coarser electrostatically precipitated fraction into at least one coarser subfraction and at least one finer subfraction based on the particle diameter of the fly ash particles contained therein.

The at least one coarser subfraction obtainable by the method may have such a low content of harmful substances, such as heavy metals, that it may be used as a field fertilizer or as a raw material for a field fertilizer. Further, one or more of the at least one finer subfractions and optionally also one or more of the at least one finer electrostatically precipitated fraction may be used as a forest fertilizer or as a raw material for a forest fertilizer. In this manner, it may be possible to recycle and use the entire coarser electrostatically precipitated fraction or fractions or possibly even the entire fly ash captured and fractionated by electrostatic precipitation. Thus the fly ash may be reused in a more sustainable manner, and the overall efficiency of the fly ash processing may be improved.

Various factors may have an effect on the sizes of the particles of the fly ash. For example, the combusted material and/or combustion temperature may have an effect. When using fluidized bed combustion, the temperature of the fluidized bed, the addition of bed material, such as sand, residence time of the combusted biomass, and feed particle sizes may also have an effect.

The term "electrostatic precipitation" or "ESP" may be understood as referring to the capture or precipitation of fly ash particles based on ionisation of gas molecules. In electrostatic precipitation, flue gases may be led through a strong electric field, which produces negatively and positively charged ions. Ions formed in the electric field may adhere to particles of fly ash suspended in the flue gases, causing them to become charged and to move towards the collecting plates or the discharge electrodes of the electrostatic precipitation apparatus or unit used. The precipitated fly ash may be removed from the collection plates and/or discharge electrodes periodically. Thus the electrostatically precipitated fractions may be recovered. For example, it is possible to provide two or more ESP units through which the flue gases are driven sequentially, such that the at least one coarser electrostatically precipitated fraction is obtainable from the first ESP unit, and one or more finer electrostatically precipitated fractions are obtainable from one or more further ESP units, respectively, through which the flue gases are driven after passing through the first ESP unit. In an embodiment, two or more finer electrostatically precipitated fractions are obtainable in addition to the at least one coarser electrostatically precipitated fraction, so that altogether three or more electrostatically precipitated fractions may be obtainable. Of the two or more finer electrostatically precipitated fractions, the first in obtainable in sequence from the two or more further ESP units may be coarser than the later fraction (s). The ESP unit(s) and their operating parameters may be selected so that desired fly ash fractions may be obtained.

For example, one coarser electrostatically precipitated fraction and one, two or more finer electrostatically precipitated fraction may be obtained. In such an embodiment, the coarser electrostatically precipitated fraction may be subfractionated. It is also possible to obtain two or more coarser electrostatically precipitated fractions and one or more finer electrostatically precipitated fractions. In such an embodiment, both of the two or more coarser electrostatically precipitated fractions may be subfractionated. In an embodiment, n electrostatically precipitated fractions are obtained, wherein up to n - 1 coarser electrostatically precipitated fractions are subfractionated. In such embodiments, the yield of the at least one coarser subfraction may be increased.

Particle diameters and their distributions may be measured based on laser diffraction, for instance using a Coulter LS particle analyzer. An example of a suitable particle analyzer is the Coulter LS 230 particle distribution analyzer. In laser diffraction, a group of particles is illuminated with mono-chromic light. The particles cause scattering of light. The nature of the scattering may depend on the size and refractive index of the particles. The particle size distribution may be calculated based on the measured scatter pattern detected.

The term "average particle diameter" may be understood as referring to the mean value of all particle diameters in the sample. The term "average particle diameter" may, in the context of this specification, refer to volume average particle diameter. It may, alternatively or additionally, refer to the volume mean particle diameter. In an embodiment, the term "average particle diameter" refers to number average diameter.

The term "median particle diameter" may refer to the midpoint of particle diameters when all particle diameters in the sample are arranged in the order of value, i.e. there are equally many higher and lower values. The term "median particle diameter" or "D50" may, in the context of this specification, refer to volume median particle diameter.

The terms "coarser" and "finer" in the context of the fractions described in this specification, such as "coarser electrostatically precipitated fraction" and "finer electrostatically precipitated fraction", may be understood such that the fractions are coarser or finer relative to each other, i.e. that the finer fraction is finer than the coarser fraction. The fractions typically have particle size distributions that may be different from each other. The particle size distributions of the at least one coarser electrostatically precipitatated fraction and the at least one finer electrostatically precipitated fraction may overlap at least to some extent. As described earlier, various factors may have an effect on the exact particle size distributions.

In an embodiment, the average particle diameter of the fly ash particles in the at least one coarser electrostatically precipitated fraction is greater than the average particle diameter of the fly ash particles in the at least one finer electrostatically precipitated fraction. In an embodiment, the median particle diameter of the fly ash particles in the at least one coarser electrostatically precipitated fraction is greater than the median particle diameter of the fly ash particles in the at least one finer electrostatically precipitated fraction. In an embodiment, the average particle diameter and the median particle diameter of the fly ash particles in the at least one coarser electrostatically precipitated fraction are greater than the average particle diameter and the median particle diameter of the fly ash particles in the at least one finer electrostatically precipitated fraction, respectively.

The average particle diameter of the fly ash particles in the at least one coarser electrostatically precipitated fraction may be at least 1.5 times the average particle diameter of the fly ash particles in the at least one finer electrostatically precipitated fraction. In an embodiment, the average particle diameter of the fly ash particles in the at least one coarser electrostatically precipitated fraction is at least 2 times the average particle diameter of the fly ash particles in the at least one finer electrostatically precipitated fraction. In an embodiment, the average particle diameter of the fly ash particles in the at least one coarser electrostatically precipitated fraction is at least 2.5 times the average particle diameter of the fly ash particles in the at least one finer electrostatically precipitated fraction. In an embodiment, the average particle diameter of the fly ash particles in the at least one coarser electrostatically precipitated fraction is at least 3 times the average particle diameter of the fly ash particles in the at least one finer electrostatically precipitated fraction.

The median particle diameter of the fly ash particles in the at least one coarser electrostatically precipitated fraction may be at least 1.5 times the median particle diameter of the fly ash particles in the at least one finer electrostatically precipitated fraction. In an embodiment, the median particle diameter of the fly ash particles in the at least one coarser electrostatically precipitated fraction is at least 2 times the median particle diameter of the fly ash particles in the at least one finer electrostatically precipitated fraction. In an embodiment, the median particle diameter of the fly ash particles in the at least one coarser electrostatically precipitated fraction is at least 2.5 times the median particle diameter of the fly ash particles in the at least one finer electrostatically precipitated fraction. In an embodiment, the median particle diameter of the fly ash particles in the at least one coarser electrostatically precipitated fraction is at least 3 times the median particle diameter of the fly ash particles in the at least one finer electrostatically precipitated fraction.

The fly ash may be subfractionated so that the heavy metal content, such as the cadmium (Cd) content, of the at least one coarser electrostatically precipitated fraction is smaller than the heavy metal content, such as the Cd content, of the at least one finer electrostatically precipitated fraction. Thus Cd and/or other heavy metals may be enriched in the at least one finer electrostatically precipitated fraction. At least one coarser electrostatically precipitated fraction having a sufficiently low Cd content and possibly also a low content of other heavy metals may thereby be obtained.

The obtained at least one coarser electrostatically precipitated fraction may be subfractionated into at least one coarser subfraction and at least one finer subfraction based on the particle diameter of the fly ash particles contained therein. It may be subfractionated based on the particle diameter so that fly ash particles having a large diameter are enriched in the at least one coarser subfraction and fly ash particles having a small diameter are enriched in the at least one finer subfraction. However, the subfractionation may be performed based on additional properties, such as the density and/or shape of the fly ash particles.

In an embodiment, the subfractionation is based on the particle diameter and the density of the fly ash particles. In an embodiment, the subfractionation is based on the particle diameter and the shape of the fly ash particles. In an embodiment, the subfractionation is based on the shape and the density of the fly ash particles. In an embodiment, the subfractionation is based on the particle diameter, shape and density of the fly ash particles.

The apparatus(es) used for the subfractionating and its operating parameters may be selected so that desired fly ash subfractions may be obtained.

The at least one coarser electrostatically precipitated fraction may be subfractionated using an apparatus comprising at least one of a classifier, a screen, a separator, or a sorter. The classifier may be e.g. a cyclone classifier. However, other apparatuses may also be contemplated. In an embodiment, the at least one coarser electrostatically precipitated fraction may be subfractionated using an apparatus selected from the group consisting of a classifier, such as a cyclone classifier, a screen, a separator, a sorter and any combinations thereof.

Apparatuses that may be used for subfractionating the at least one coarser electrostatically precipitated fraction may fractionate the fly ash particles based on more than one property. In an embodiment, the at least one coarser electrostatically precipitated fraction may be subfractionated based on the particle diameter and density of the fly ash particles contained therein. In an embodiment, the subfractionation is based on the particle diameter and the density of the fly ash particles. In an embodiment, the subfractionation is based on the particle diameter and the shape of the fly ash particles. In an embodiment, the subfractionation is based on the shape and the density of the fly ash particles. In an embodiment, the subfractionation is based on the particle diameter, shape and density of the fly ash particles.

For example, cyclone classifiers and other cyclone-type apparatuses may separate fly ash particles based on the particle diameter and density. Cyclone classifiers and other cyclone-type apparatuses may be based on a high speed rotating gas (typically air) flow that is established within a cylindrical or conical container, i.e. the cyclone. In an exemplary cyclone classifier, air flows in a helical pattern, beginning at the top (wide end) of the cyclone and ending at the bottom (narrow) end before exiting the cyclone in a straight stream through the center of the cyclone and out the wide end. Larger (denser) particles in the rotating stream may strike the outside wall and fall to the bottom of the cyclone where they can be removed. The cyclone geometry, together with flow rate, may define the cut point of the cyclone, i.e. the size of particles that will be removed from the stream with 50% efficiency. Particles larger than the cut point will be removed with a greater efficiency, and smaller particles with a lower efficiency. In another exemplary cyclone classifier, a secondary gas (air) flow within the cyclone may keep the collected particles from striking the walls. The primary air flow containing the particles may enter from a first end of the cyclone and is forced into spiral rotation. The secondary air flow may enter from a second end of the cyclone and move towards the first end, intercepting the particles from the primary air.

As a further example, air classifiers may separate particles based on the combination of particle diameter, shape and density of the particles. Air classifiers may operate by injecting the particle stream to be sorted into a chamber which contains a column of rising air. Inside the separation chamber, air may drag on the parties, supplying an upward force which may lift the particles up into the air. Due to the dependence of air drag on object size and shape, the particles in the moving air column may be sorted vertically and thus be separated.

As a further example, a screen, such as a mechanical screen, may subfractionate particles based on particle size, i.e. particle diameter and optionally shape.

Tthe terms "coarser" and "finer" in the context of the fractions, such as "coarser subfraction" and "finer subfraction", may be understood such that the fractions are coarser or finer relative to each other, i.e. that the finer subfraction is finer than the coarser subfraction. The fractions typically have particle size distributions that may be different from each other. The particle size distributions of the at least one coarser subfraction and the at least one finer subfraction may overlap at least partially. In an embodiment, the average particle diameter of the fly ash particles in the at least one coarser subfraction is greater than the average particle diameter of the fly ash particles in the at least one finer subfraction. In an embodiment, the median particle diameter of the fly ash particles in the at least one coarser subfraction is greater than the median particle diameter of the fly ash particles in the at least one finer subfraction. In an embodiment, the average particle diameter and the median particle diameter of the fly ash particles in the at least one coarser subfraction are greater than the average particle diameter and the median particle diameter of the fly ash particles in the at least one finer subfraction, respectively.

The average particle diameter of the fly ash particles in the at least one coarser subfraction may be at least 1.5 times the average particle diameter of the fly ash particles in the at least one finer subfraction. In an embodiment, the average particle diameter of the fly ash particles in the at least one coarser subfraction may be at least 2 times the average particle diameter of the fly ash particles in the at least one finer subfraction. In an embodiment, the average particle diameter of the fly ash particles in the at least one coarser subfraction may be at least 2.5 times the average particle diameter of the fly ash particles in the at least one finer subfraction. In an embodiment, the average particle diameter of the fly ash particles in the at least one coarser subfraction may be at least 3 times the average particle diameter of the fly ash particles in the at least one finer subfraction. In an embodiment, the average particle diameter of the fly ash particles in the at least one coarser subfraction may be at least 4 times the average particle diameter of the fly ash particles in the at least one finer subfraction.

The median particle diameter of the fly ash particles in the at least one coarser subfraction may be at least 1.5 times the median particle diameter of the fly ash particles in the at least one finer subfraction. In an embodiment, the median particle diameter of the fly ash particles in the at least one coarser subfraction may be at least 2 times the median particle diameter of the fly ash particles in the at least one finer subfraction. In an embodiment, the median particle diameter of the fly ash particles in the at least one coarser subfraction may be at least 2.5 times the median particle diameter of the fly ash particles in the at least one finer subfraction. In an embodiment, the median particle diameter of the fly ash particles in the at least one coarser subfraction may be at least 3 times the median particle diameter of the fly ash particles in the at least one finer subfraction. In an embodiment, the median particle diameter of the fly ash particles in the at least one coarser subfraction may be at least 4 times the median particle diameter of the fly ash particles in the at least one finer subfraction.

The at least one coarser subfraction may consist of at most 90 % (w/w) of the total coarser electrostatically precipitated fraction. In an embodiment, the at least one coarser subfraction consists of at most 80 % (w/w) of the total coarser electrostatically precipitated fraction. In an embodiment, the at least one coarser subfraction consists of at most 70 % (w/w) of the total coarser electrostatically precipitated fraction. In an embodiment, the at least one coarser subfraction consists of at most 60 % (w/w) of the total coarser electrostatically precipitated fraction. The at least one coarser subfraction may consist of at least 10 % (w/w) of the total coarser electrostatically precipitated fraction. In an embodiment, the at least one coarser subfraction consists of at least 20 % (w/w) of the total coarser electrostatically precipitated fraction. In an embodiment, the at least one coarser subfraction consists of at least 30 % (w/w) of the total coarser electrostatically precipitated fraction. In an embodiment, the at least one coarser subfraction consists of at least 40 % (w/w) of the total coarser electrostatically precipitated fraction.

In an embodiment, the method comprises fractionating fly ash particles contained in the fly ash by electrostatic precipitation into at least one coarser electrostatically precipitated fraction and at least one finer electrostatically precipitated fraction, so that the average particle diameter of the fly ash particles in the at least one coarser electrostatically precipitated fraction is greater than the average particle diameter of the fly ash particles in the at least one finer electrostatically precipitated fraction; and subfractionating the at least one coarser electrostatically precipitated fraction into at least one coarser subfraction and at least one finer subfraction based on the particle diameter of the fly ash particles contained therein, so that the average particle diameter of the fly ash particles in the at least one coarser subfraction is greater than the average particle diameter of the fly ash particles in the at least one finer subfraction.

In an embodiment, the method comprises fractionating fly ash particles contained in the fly ash by electrostatic precipitation into at least one coarser electrostatically precipitated fraction and at least one finer electrostatically precipitated fraction, so that the median particle diameter of the fly ash particles in the at least one coarser electrostatically precipitated fraction is greater than the median particle diameter of the fly ash particles in the at least one finer electrostatically precipitated fraction; and subfractionating the at least one coarser electrostatically precipitated fraction into at least one coarser subfraction and at least one finer subfraction based on the particle diameter of the fly ash particles contained therein, so that the median particle diameter of the fly ash particles in the at least one coarser subfraction is greater than the median particle diameter of the fly ash particles in the at least one finer subfraction.

The fly ash may be obtainable from the combustion of biomass. At least a part or all of the fly ash processed according to the method may be obtainable from the combustion of biomass. The composition of the biomass may have an effect on the composition and properties of the fly ash, such as the particle size distribution.

The fly ash may be obtainable from fluidized bed combustion of biomass. The fluidized bed combustion may refer to combustion in a circulated fluidized bed and/or in a bubbling fluidized bed, but is not particularly limited to any particular boiler type. Further, the boiler or combustor from which the fly ash may be obtainable is not particularly limited. The fly ash may also be obtainable e.g. from a boiler of a deinked pulp (DIP) plant.

The biomass may be any biomass, ash from which may be used e.g. for fertilizer purposes. The biomass may comprise at least one of plant-based biomass, wood-based biomass, animal waste, waste water treatment sludge, or de-inked pulp. The waste water treatment sludge may be e.g. biosludge or primary sludge, such as fibrous primary sludge. Examples of waste water treatment sludge are fiber sludges and fiber-containing sludges from a waste water treatment plant. The waste water treated at the waste water plant may be obtainable from e.g. a mechanical wood processing, pulp, or paper production plant. Such sludges may also contain microbial, e.g. bacterial biomass. De-inked pulp may also be considered to be biomass. In an embodiment, the biomass may be selected from the group consisting of plant-based biomass, wood-based biomass, animal waste, waste water treatment sludge, de-inked pulp, and any combinations thereof.

The plant-based biomass may comprise e.g. wood-based biomass, non-wood-based biomass, peat, bark or any combinations or mixtures thereof.

The wood-based biomass may comprise e.g. recycled wood material, wood chips, saw dust, or any combinations or mixtures thereof. The wood-based biomass may comprise softwood, hardwood or any combinations or mixtures thereof. The wood-based biomass may be, for example, obtainable from birch, conifers, eucalyptus or any combinations or mixtures thereof.

In an embodiment, the biomass comprises or is wood-based biomass. Fly ash obtainable from the combustion of wood-based biomass is well suited for processing according to the method.

The fly ash of the at least one coarser electrostatically precipitated fraction may, if desired, be pretreated prior to subfractionating. The method may comprise, for example, reducing the particle size of at least a part of the at least one coarser electrostatically precipitated fraction prior to subfractionating. The particle size may be reduced, for instance, by pretreating, grinding, milling or impacting. The reduction of the particle size may lead to a reduction of the average and/or median particle diameter of the at least one coarser electrostatically precipitated fraction. The reduction of the particle size may assist in the subfractionation. A gentle grinding, milling or impacting may be sufficient; a large reduction in the particle size of the fly ash may, in some cases, impede the subfractionation.

The at least one coarser electrostatically precipitated fraction may be subfractionated so that the heavy metal content, such as Cd content, of the at least one coarser subfraction is smaller than the heavy metal content, such as Cd content, of the at least one finer subfraction. Thus Cd and/or other heavy metals may be enriched in the at least one finer subfraction. At least one coarser subfraction having a sufficiently low Cd content and/or content of other heavy metals may thereby be obtained.

The Cd content of the at least one coarser subfraction may be less than or equal to 2.5 mg/kg based on the total dry weight of the fly ash of the at least one coarser subfraction. However, the maximum allowed Cd content value for certain uses may depend on local legislation. For instance, the Cd content of the at least one coarser subfraction may be less than or equal to 3 mg/kg, or less than or equal to a value defined by local legislation.

The Cd content of the at least one finer subfraction may be less than or equal to 25 mg/kg based on the total dry weight of the fly ash of the at least one finer subfraction. However, the Cd content of the at least one finer subfraction may be less than or equal to a value defined by local legislation.

In an embodiment, the Cd content of the at least one coarser subfraction is less than or equal to 2.5 mg/kg (or 3 mg/kg, or other value defined by local legislation) based on the total dry weight of the fly ash of the at least one coarser subfraction, and the Cd content of the at least one finer subfraction is less than or equal to 25 mg/kg (or less than or equal to a value defined by local legislation) based on the total dry weight of the fly ash of the at least one finer subfraction.

The content of at least one nutrient or micronutrient in the at least one coarser subfraction may be smaller than the content of the at least one nutrient or micronutrient in the at least one finer subfraction. One or more nutrients and/or micronutrients may be enriched in the at least one finer subfraction. The at least one nutrient or micronutrient may be at least one of P, Ca, K, B, Se, or any combinations thereof. In an embodiment, the at least one nutrient or micronutrient may be selected from the group consisting of P, Ca, K, B, Se, and any combinations thereof.

For example, the calcium (Ca) content in the at least one coarser subfraction may be smaller than the calcium content in the at least one finer subfraction. In such an example, calcium may be added to the at least one coarser subfraction to achieve a desired calcium content. Other micronutrients and/or macronutrients may, alternatively or additionally, be added as desired.

The calcium content of the at least one finer subfraction may be at least 6 % (w/w) based on the total dry weight of the fly ash of the at least one finer subfraction.

The combined P and K content (sum of P and K contents) of the at least one finer subfraction may be at least 2 % (w/w) based on the total dry weight of the fly ash of the at least one finer subfraction.

The method may further comprise recovering the at least one coarser subfraction and the at least one finer subfraction.

The method may further comprise combining the at least one finer electrostatically precipitated fraction with the at least one finer subfraction (or with at least one finer subfraction, if more than one finer subfractions are obtained). The combination thereby obtained may be recovered. These fractions may have suitable properties for further use e.g. as a forest fertilizer and may therefore be combined.

The method may further comprise combining at least one back pass fraction with the at least one coarser subfraction. The term "back pass fraction" or "back pass" may, in the context of this specification, refer to a fly ash fraction gravitationally removed from the flue gas ducting conveying the fly ash from the combustor for combusting the biomass before the electrostatic precipitation. A back pass fraction is typically relatively coarse and may be coarser than the at least one coarser electrostatically precipitated fraction.

The method may further comprise adding calcium to the at least one coarser subfraction and/or to the at least one finer subfraction. The addition of calcium may improve the neutralizing capability of the fraction(s) and/or of products containing the fraction(s) or obtainable therefrom. The calcium may be added in any suitable form, such as in the form of lime.

A coarser subfraction obtainable by the method according to one or more embodiments described in this specification is also disclosed.

A product comprising a coarser subfraction according to one or more embodiments described in this specification is further disclosed.

The product may further comprise e.g. calcium, for instance in the form of lime.

The product may be a fertilizer product or a soil conditioner. The product may be e.g. a field fertilizer product. The product may also be or be used as an additive for cement or concrete products. For example, it may be or be used as a replacement or partial replacement for cement or as a mass stabilizer. The product may also be or be used as a filler for road construction.

The coarser subfraction or the product may be processed further, e.g. granulated.

Use of the coarser subfraction according to one or more embodiments described in this specification for fertilizing, soil conditioning or as a component of cement or concrete is also disclosed.

A finer subfraction obtainable by the method according to one or more embodiments described in this specification is also disclosed. The at least finer subfraction may be of a suitable quality for further use e.g. for forest fertilizing, and may even have a better quality for such purposes than ash fractions and products currently available.

A product comprising a finer subfraction according to one or more embodiments described in this specification is further disclosed.

The product may further comprise at least a part of the at least one finer electrostatically precipitated fraction obtainable by the method according to one or more embodiments described in this specification.

The product may further comprise e.g. calcium, for instance in the form of lime.

The product may be a fertilizer product. The product may be e.g. a forest fertilizer product. The product may also be or be used as an additive for cement or concrete products. For example, it may be or be used as a replacement or partial replacement for cement or as a mass stabilizer. The product may also be or be used as a filler for road construction.

Use of a finer subfraction according to one or more embodiments described in this specification for fertilizing or as a component of cement or concrete is also disclosed.

A system for processing fly ash obtainable from the combustion of biomass is also disclosed, the system comprising
an electrostatic precipitator for fractionating fly ash particles contained in the fly ash by electrostatic precipitation into at least one coarser electrostatically precipitated fraction and at least one finer electrostatically precipitated fraction; and
a subfractionation apparatus for subfractionating the at least one coarser electrostatically precipitated fraction into at least one coarser subfraction and at least one finer subfraction based on the particle diameter of the fly ash particles contained therein.

The system may be suitable for processing fly ash according to one or more embodiments of the method.

The system may comprise a combustor or boiler for combusting the biomass. The fly ash may thus be obtainable from the combustor or boiler. The system may also comprise flue gas ducting for directing flue gases produced during the combustion to the electrostatic precipitator. The flue gas ducting may be configured to direct the flue gases produced during the combustion to the electrostatic precipitator.

The system may comprise a fluidized bed combustor for combusting the biomass. The fly ash may be obtainable from the fluidized bed combustor. The combustor or boiler may also be any other combustor or boiler described in this specification.

The electrostatic precipitator, i.e. an electrostatic precipitation apparatus, may be configured to fractionate fly ash particles contained in the fly ash by electrostatic precipitation into the at least one coarser electrostatically precipitated fraction and the at least one finer electrostatically precipitated fraction. The electrostatic precipitator for fractionating fly ash particles contained in the fly ash by electrostatic precipitation into the at least one coarser electrostatically precipitated fraction and the at least one finer electrostatically precipitated fraction may comprise one, two or more electrostatic precipitator units, which may be configured to obtain a separate electrostatically precipitated fraction from each unit, for instance as described in the context of the method.

The subfractionation apparatus may be configured to subfractionate the at least one coarser electrostatically precipitated fraction into the at least one coarser subfraction and the at least one finer subfraction based on the particle diameter of the fly ash particles contained therein.

The subfractionation apparatus may be configured to subfractionate the at least one coarser electrostatically precipitated fraction into the at least one coarser subfraction and the at least one finer subfraction based on the particle diameter of the fly ash particles contained therein. It may be configured to subfractionate based on the particle diameter so that fly ash particles having a large diameter are enriched in the at least one coarser subfraction and fly ash particles having a small diameter are enriched in the at least one finer subfraction. However, it may be configured to subfractionate based on additional properties, such as the density and/or shape of the fly ash particles. In an embodiment, it is configured to subfractionate based on the particle diameter and the density of the fly ash particles. In an embodiment, it is configured to subfractionate based on the particle diameter and the shape of the fly ash particles. In an embodiment, it is configured to subfractionate based on the shape and the density of the fly ash particles. In an embodiment, it is configured to subfractionate based on the particle diameter, shape and density of the fly ash particles.

The subfractionating apparatus and its operating parameters may be selected so that desired fly ash subfractions may be obtained.

The subfractionation apparatus may be any suitable subfractionation apparatus described in this specification. For example, the subfractionating apparatus may comprise or be at least one of a classifier, a screen, a separator, or a sorter. The classifier may be e.g. a cyclone classifier. However, other apparatuses may also be contemplated. In an embodiment, the subfractionating apparatus may comprise or be an apparatus selected from the group consisting of a classifier, such as a cyclone classifier, a screen, a separator, a sorter and any combinations thereof.

The subfractionating apparatus may be configured to fractionate the fly ash particles based on more than one property. In an embodiment, it is configured to subfractionate based on the particle diameter and density of the fly ash particles contained therein. In an embodiment, it is configured to subfractionate based on the particle diameter and the density of the fly ash particles. In an embodiment, it is configured to subfractionate based on the particle diameter and the shape of the fly ash particles. In an embodiment, it is configured to subfractionate based on the shape and the density of the fly ash particles. In an embodiment, it is configured to subfractionate based on the particle diameter, shape and density of the fly ash particles. Various examples of such apparatuses are described in this specification.

The coarser and finer electrostatically precipitated fractions may be any coarser and finer electrostatically precipitated fractions described in this specification, respectively. The coarser and finer subfractions may be any coarser and finer subfractions described in this specification, respectively.

The system may further comprise an apparatus for pretreating or reducing the particle size of at least a part of the at least one coarser electrostatically precipitated fraction prior to subfractionating. The apparatus for reducing the particle size may be, for instance, an apparatus for pretreating, grinding, milling or impacting. The apparatus for reducing the particle size may be, for instance, an apparatus configured to pretreat, grind, mill or impact the at least one coarser electrostatically precipitated fraction, such that the the average or median particle diameter of the at least one coarser electrostatically precipitated fraction is reduced.

The subfractionating apparatus may be confifured to subfractionate the at least one coarser electrostatically precipitated fraction so that the heavy metal content, such as the Cd content, of the at least one coarser subfraction is smaller than the heavy metal content, such as the Cd content, of the at least one finer subfraction. The Cd contents of the subfractions may be e.g. as described in the context of the method.

The subfractionating apparatus may be configured to subfractionate the at least one coarser electrostatically precipitated fraction so that the content of at least one nutrient or micronutrient in the at least one coarser subfraction is smaller than the content of the at least one nutrient or micronutrient in the at least one finer subfraction. One or more nutrients and/or micronutrients may be enriched in the at least one finer subfraction. The at least one nutrient or micronutrient may be at least one of P, Ca, K, B, Se, or any combinations thereof.

The system may further comprise an apparatus for recovering, or configured to recover, the at least one coarser subfraction and the at least one finer subfraction.

The system may further comprise an apparatus for combining, or configured to combine, the at least one finer electrostatically precipitated fraction with the at least one finer subfraction.

The embodiments described hereinbefore may be used in any combination with each other. Several of the embodiments may be combined together to form a further embodiment of the invention. A method, a product, a system or a use, to which the invention is related, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

### EXAMPLES

Reference will now be made in detail to the embodiments of the present invention, an example of which is illustrated in the accompanying drawing.

The description below discloses some embodiments in such a detail that a person skilled in the art is able to utilize the invention based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

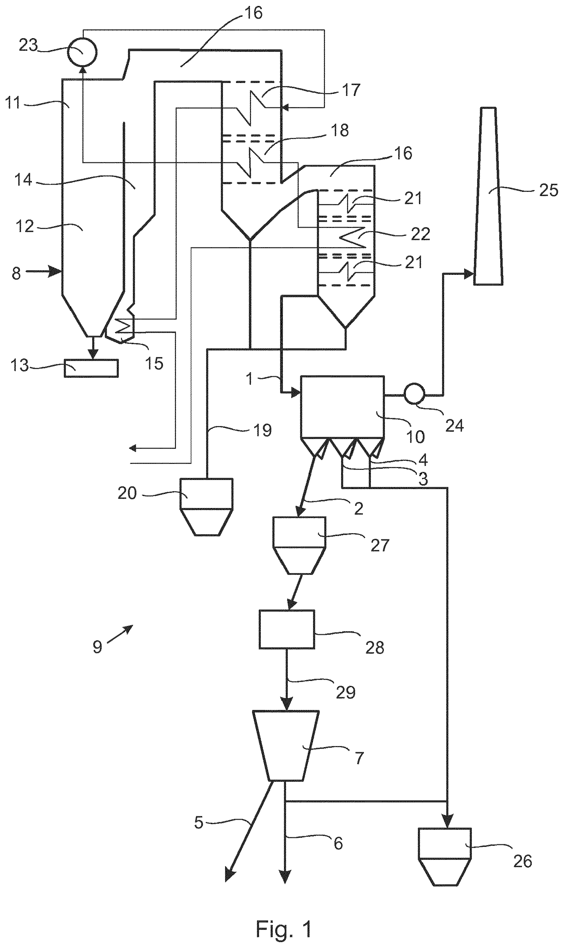

Figure 1 illustrates a method and a system 9 according to an embodiment for processing fly ash. Biomass 8, such as wood chips and/or bark or any other suitable biomass, is fed into a furnace 12 of a power boiler 11, in this exemplary embodiment a fluidized bed combustor, suitable for combusting the biomass 8. Ash 13 may be removed from the the furnace 12. The fluidized bed combustor 11 may further comprise a cyclone 14 and a superheater 15, such as an Intrex superheater. Flue gases produced during combustion are directed through flue gas ducting 16. After the flue gases have passed through a second superheater 17 and an economizer 18, a part of the fly ash driven by the flue gases, i.e. one or more back pass fractions, may be gravitationally removed via a conduit 19 and placed in a fly ash silo 20. The flue gases remaining may continue via the flue gas ducting 16 through air preheaters 21 and a second economizer 22 between the air preheaters 21. Thereafter, a further part of the fly ash, i.e. one or more back pass fractions, may be removed via the conduit 19 to the fly ash silo 20. The parts of the fly ash removed at this stage are typically very coarse. The economizers 18 and 22 may be connected to a steam drum 23.

Before the flue gases are propelled by a flue gas blower 24 to a chimney 25, they pass through an electrostatic precipitator 10 as does the fly ash 1 contained in or driven by the flue gases. In this exemplary embodiment, the electrostatic precipitator 10 fractionates the fly ash particles contained in the fly ash 1 into three fractions: a coarser electrostatically precipitated fraction 2 and two finer electrostatically precipitated fractions 3 and 4. The finer electrostatically precipitated fractions 3 and 4 may be conveyed to a fly ash bin 26. The coarser electrostatically precipitated fraction 2 may be conveyed to an intermediate storage bin 27.

From the intermediate storage bin 27, the coarser electrostatically precipitated fraction 2 may be conveyed to an apparatus 28 for reducing the particle size of at least a part of the coarser electrostatically precipitated fraction 2. The apparatus 28 may be, for instance, a milling apparatus. However, in many cases reducing the particle size of the coarser electrostatically precipitated fraction may have a minor effect, if any, on subsequent subfractionation.

The coarser electrostatically precipitated fraction, the particle size of which has been reduced 29, is then fed into a subfractionation apparatus 7 for subfractionating the coarser electrostatically precipitated fraction 29 into a coarser subfraction 5 and at least one finer subfraction 6 based on the particle diameter of the fly ash particles contained therein. The subfractionation apparatus 7 may be or comprise any apparatus suitable for subfractionating the fraction based on the particle diameter and optionally also on density of the fly ash particles. For example, it may be a classifier, such as a cyclone classifier, a screen, a separator, or a sorter. If desired, the finer subfraction 6 may be conveyed to the fly ash bin 26 and combined with one or more of the finer electrostatically precipitated fraction(s) 3 and 4. The finest electrostatically precipitated fraction 4 may alternatively or additionally be used for other purposes or purified further, for instance by ash decontamination (ASH DEC).

In this exemplary embodiment, the electrostatic precipitator 10 fractionates the fly ash particles contained in the fly ash 1 into three fractions: a coarser electrostatically precipitated fraction 2 and two finer electrostatically precipitated fractions 3 and 4. However, in other embodiments, the fractions 2 and 3 could both be coarser electrostatically precipitated fractions and could be subfractionated, fraction 4 being the only finer electrostatically precipitated fraction. In this embodiment, the yield of the coarser subfraction may be improved. However, the properties of the fly ash may have an effect on how many electrostatically precipitated fractions are obtained and which of them or which proportion thereof are subfractionated.

### EXAMPLE 1

Fly ash fractions from a power boiler combusting biomass were fractionated using three electrostatic precipitator (ESP) units into fractions A, B and C. The power boiler and the ESP unit setup was similar to that shown in Fig. 1. Fraction A was considered a coarser electrostatically precipitated fraction, B a finer electrostatically precipitated fraction, i.e. finer than A, and C was considered the finest electrostatically precipitated fraction. Furthermore, two back pass fractions were gravitationally removed from the flue gas ducting before the ESP units.

Table 1 shows the results of analyses of the ESP fractions A, B and C and of the back pass fractions. Ca and heavy metals were found to accumulate and thereby become enriched to the finer electrostatically precipitated fractions B and C.

Fraction A, i.e. the coarser electrostatically precipitated fraction, was further fractionated into a coarser subfraction containing 70 % (w/w) of the fly ash of the ESP fraction A and into a finer subfraction containing 30 % (w/w) of the fly ash of the ESP fraction A. The subfractionation was perfomed using a Hosokawa Alpine ATP air classifier. Results of the analyses of the subfractions are also shown in Table 1.

Volume median particle diameters (D50) and distributions of the fractions (described as proportions of particles having a diameter < 10 µm and < 2 µm) were measured using a laser diffraction method using a Coulter LS 230 particle analyzer.

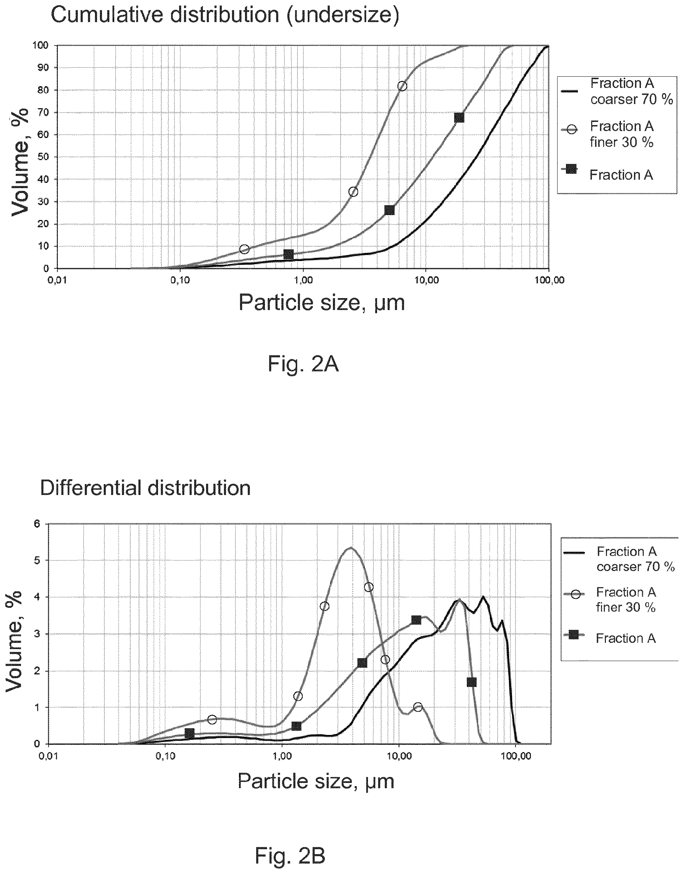

Figs. 2A and 2B show particle size distributions of the ESP fraction A before subfractionating, the coarser and the finer subfractions.

According to the analyses, the coarser subfraction was well suited for fertilizing applications, for example as a field fertilizer. The finer subfraction and also the finer ESP fractions B and C were also well suited e.g. for forest fertilizing applications.

**Table 1. Analyses of fractionated fly ash.**

| Sample | | Back pass 1 | Back pass 2 | Coarser ESP fraction A | Coarser ESP fraction A, coarser subfraction 70% | Coarser ESP fraction A, fine subfraction 30% | Finer ESP fraction B | Finest ESP fraction C |
|---|---|---|---|---|---|---|---|---|
| Element | | | | | | | | |
| Arsenic | mg/kg | <5 | <5 | 6.0 | 6 | 14 | 9.0 | 24 |
| Cadmium | mg/kg | 2.5 | 0.8 | 3.9 | 2.4 | 11.1 | 6.2 | 9.9 |
| Chromium | mg/kg | 33 | 23 | 38 | 49 | 50 | 40 | 51 |
| Copper | mg/kg | 36 | 28 | 43 | 48 | 100 | 53 | 86 |
| Nickel | mg/kg | 22 | 15 | 26 | 30 | 42 | 35 | 58 |
| Lead | mg/kg | 13 | <10 | 25 | 25 | 62 | 29 | 33 |
| Selenium | mg/kg | <10 | <10 | <10 | 0.4 | 3.6 | <10 | <10 |
| Zinc | mg/kg | 510 | 570 | 650 | 750 | 2006 | 880 | 1300 |
| Mercury | mg/kg | <0.2 | <0.2 | <0.2 | | | <0.2 | 0.3 |
| Potassium | % | 1.0 | 0.8 | 1.4 | 1.5 | 3.4 | 2.4 | 3.9 |
| Phosphorus | % | 0.4 | 0.3 | 0.8 | 0.6 | 1.4 | 1.1 | 1.3 |
| Total calcium | % | | | | 11 | 22 | | |
| D50 | µm | | | 11 | 26 | 4 | 9 | 4 |
| < 10 µm | % | | | 46 | 22 | 93 | 53 | 84 |
| < 2 µm | % | | | 11 | 5 | 25 | 15 | 26 |

### EXAMPLE 2

Fly ash fractions from a power boiler combusting biomass were fractionated and analysed essentially as in Example 1.

The particle volume diameter distributions were measured using an internal method, in which a few teaspoonfuls of each ash sample was dosed into a 50 ml sample jar, which was subsequently filled with ethanol. The sample jar was placed in a magnetic stirrer for stirring for at least 1 minute. The sample was then dispensed into the sample chamber of a Coulter LS 230 particle size distribution analyzer. The measurements were essentially performed according to the analyzer manufacturer's instructions using the debubbling routine, sonicating the samples before performing the analyses and by including PIDS data (for analyzing the proportion of < 5 µm particles).

Table 2 shows the results of the analyses of the fractions obtained.

**Table 2. Analyses of fractionated fly ash.**

| **Trialpoint** | **Unit** | **Method** | **Original fly ash ESP fraction A** | **Fly ash ESP fraction A, classified, 40%, coarse** | **Fly ash ESP fraction A, classified, 60%, fine** |
|---|---|---|---|---|---|
| Coulter LS particle size average | µm | Internal | 17.40 | 73.10 | 17.71 |
| Coulter LS particle size median | µm | Internal | 13.92 | 72.89 | 14.01 |
| Coulter LS particle size mode | µm | Internal | 19.76 | 116.30 | 23.81 |
| Coulter LS particle size <50µm | % | Internal | 96.80 | 32.80 | 96.40 |
| Coulter LS particle size <25µm | % | Internal | 74.90 | 14.30 | 73.60 |
| Coulter LS particle size <10µm | % | Internal | 37.40 | 5.79 | 37.70 |
| Coulter LS particle size <5µm | % | Internal | 18.80 | 3.90 | 19.30 |
| Coulter LS particle size <2µm | % | Internal | 8.02 | 2.48 | 7.75 |
| Coulter LS particle size <1µm | % | Internal | 5.01 | 1.78 | 4.65 |
| Coulter LS particle size <0.5µm | % | Internal | 3.30 | 1.32 | 3.07 |
| Coulter LS particle size <0.3µm | % | Internal | 2.18 | 0.90 | 2.05 |
| Coulter LS specific surface area | m²/g | Internal | 1.88 | 0.67 | 1. 82 |
| Coulter LS steepness D30/D70 | | Internal | 36.00 | 45.00 | 34.00 |
| Coulter LS steepness D20/D50 | | Internal | 38.00 | 45.00 | 37.00 |
| ICP metals using microwave digestion | | SFS-EN ISO 11885 | | | |
| Al, ICP | mg/kg | SFS-EN ISO 11885 | 27473 | 20240 | 30898 |
| As, ICP | mg/kg | SFS-EN ISO 11885 | 10.2 | 8.91 | 10.7 |
| Ca, ICP | mg/kg | SFS-EN ISO 11885 | 161143 | 118550 | 185097 |
| Cd, ICP | mg/kg | SFS-EN ISO 11885 | 6.3 | 1. 99 | 8.15 |
| Co, ICP | mg/kg | SFS-EN ISO 11885 | 11.8 | 8.66 | 13.2 |
| Cr, ICP | mg/kg | SFS-EN ISO 11885 | 45.2 | 37 | 47.2 |
| Cu, ICP | mg/kg | SFS-EN ISO 11885 | 66.6 | 42.8 | 79.6 |
| Fe, ICP | mg/kg | SFS-EN ISO 11885 | 27679 | 17700 | 32198 |
| K, ICP | mg/kg | SFS-EN ISO 11885 | 25091 | 15348 | 29321 |
| Mg, ICP | mg/kg | SFS-EN ISO 11885 | 18389 | 14398 | 22306 |
| Na, ICP | mg/kg | SFS-EN ISO 11885 | 9338 | 6186 | 10981 |
| Ni, ICP | mg/kg | SFS-EN ISO 11885 | 28.3 | 21.6 | 31.2 |
| P, ICP | mg/kg | SFS-EN ISO 11885 | 10069 | 7381 | 11819 |
| Pb, ICP | mg/kg | SFS-EN ISO 11885 | 29.6 | 14.5 | 35.3 |
| S, ICP | mg/kg | SFS-EN ISO 11885 | 20068 | 12039 | 22472 |
| Sb, ICP | mg/kg | SFS-EN ISO 11885 | 0 | 0 | 0 |
| Se, ICP | mg/kg | SFS-EN ISO 11885 | 4.4 | 2.33 | 5.01 |
| Si, ICP | mg/kg | SFS-EN ISO 11885 | 1520 | 1615 | 1455 |
| V, ICP | mg/kg | SFS-EN ISO 11885 | 34.5 | 23.8 | 39.4 |
| Zn, ICP | mg/kg | SFS-EN ISO 11885 | 1283 | 1166 | 1367 |

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for processing fly ash (1) obtainable from the combustion of biomass (8), comprising
fractionating fly ash particles contained in the fly ash by electrostatic precipitation into at least one coarser electrostatically precipitated fraction (2) and at least one finer electrostatically precipitated fraction (3, 4);
subfractionating the at least one coarser electrostatically precipitated fraction into at least one coarser subfraction (5) and at least one finer subfraction (6) based on the particle diameter of the fly ash particles contained therein; and
recovering the at least one coarser subfraction (5) and the at least one finer subfraction (6) .

2. The method according to claim 1, wherein the average particle diameter of the fly ash particles in the at least one coarser electrostatically precipitated fraction is at least 1.5 times the average particle diameter of the fly ash particles in the at least one finer electrostatically precipitated fraction.

3. The method according to claim 1 or 2, wherein the median and/or average particle diameter of the fly ash particles in the at least one coarser subfraction is at least 1.5 times the median and/or average particle diameter of the fly ash particles in the at least one finer subfraction.

4. The method according to any one of claims 1 - 3, wherein the at least one coarser electrostatically precipitated fraction is subfractionated using an apparatus (7) comprising at least one of a classifier, such as a cyclone classifier, a screen, a separator, or a sorter.

5. The method according to any one of claims 1 - 4, wherein the at least one coarser electrostatically precipitated fraction (2) is subfractionated based on the particle diameter and density of the fly ash particles contained therein.

6. The method according to any one of claims 1 - 5, wherein the fly ash (1) is obtainable from fluidized bed combustion of biomass (8).

7. The method according to any one of claims 1 - 6, wherein the biomass (8) comprises at least one of plant-based biomass, wood-based biomass, animal waste, waste water treatment sludge, or de-inked pulp.

8. The method according to any one of claims 1 - 7, wherein the Cd content of the at least one coarser subfraction (5) is less than or equal to 2.5 mg/kg and/or the Cd content of the at least one finer subfraction (6) is less than or equal to 25 mg/kg.

9. The method according to any one of claims 1 - 8, wherein the method comprises combining the at least one finer electrostatically precipitated fraction (3, 4) with the at least one finer subfraction (6).

10. A product comprising the coarser subfraction obtainable by the method according to any one of claims 1 - 9, wherein the product is a fertilizer product, such as a field fertilizer product, a soil conditioner, an additive for cement or concrete products or a filler for road construction.

11. A finer subfraction obtainable by the method according to any one of claims 1 - 9.

12. A product comprising the finer subfraction according to claim 11.

13. The product according to claim 12, wherein the product is a fertilizer product, such as a forest fertilizer product, an additive for cement or concrete products or a filler for road construction.

14. A system (9) for processing fly ash (1) obtainable from the combustion of biomass (8), comprising
an electrostatic precipitator (10) for fractionating fly ash particles contained in the fly ash by electrostatic precipitation into at least one coarser electrostatically precipitated fraction (2) and at least one finer electrostatically precipitated fraction (3, 4);
a subfractionation apparatus (7) for subfractionating the at least one coarser electrostatically precipitated fraction (2) into at least one coarser subfraction (5) and at least one finer subfraction (6) based on the particle diameter of the fly ash particles contained therein; and
an apparatus for recovering the at least one coarser subfraction and the at least one finer subfraction.

15. The system according to claim 14, wherein the subfractionation apparatus (7) is an apparatus comprising at least one of a classifier, such as a cyclone classifier, a screen, a separator, or a sorter.
